# EUROPEAN PATENT APPLICATION

(11) **EP 3 281 770 A1**
(43) Date of publication of application: **14.02.2018**
(21) Application number: 17185812.9
(22) Date of filing: 10.08.2017
(51) Int. Cl.: B29C 63/02, B41F 17/08

(54) **METHOD AND MACHINE FOR WRAPPING A PROFILE BY A WRAPPING FOIL**

(30) Priority: 10.08.2016 IT 201600084370
(71) Applicant: W.P.R. S.r.l., 31027 Spresiano (IT)
(72) Inventor: BALDASSIN, Remo, 31027 Spresiano (IT)
(74) Representative: Zamprogno, Bruno

(57) **Abstract**

Profile wrapping machine (1) structured so as to cover/wrap profiles (2) by a wrapping foil (3). The machine comprises a conveying device (5) to feed the profiles along a predetermined feeding path (F), a foil applying assembly (6) to apply a foil (3) on a surface to be coated (2a) of the profiles (2), a primer applying apparatus (11) that comprises printing heads (12) structured to deposit micro-droplets of liquid primer on the surface to be coated (2a) of the profile (2) so as to cover it.

## Description

The present invention relates to a method and to a machine for wrapping a profile by a decorative wrapping foil. In particular, the present invention relates to a primer applying apparatus comprised in the profile wrapping machine.

More in detail, the present invention relates to a method and to a machine structured/configured to couple/attach/fix, preferably continuously, a decorative wrapping foil rolled in a reel, to/on an outer surface of a profile by an adhesive fixing mixture, preferably hot, so as to produce a wrapped profile corresponding, for example, to a baseboard, and/or a sill, and/or to a component part of a door/window frame or the like, and/or to a component part of a household furnishing element (furniture) or the like; to which the following description shall make explicit reference without any loss of generality.

As is known, the machines for producing wrapped profiles cited above, indicated hereinafter as profile wrapping machines, typically comprise: a roller conveying device structured to control the movement of the profiles one after the other, between an inlet and an outlet of the machine along a horizontal rectilinear feeding path, and a foil applying assembly, which is arranged in an intermediate position along the feeding path above the rollers, and is structured to unwind the foil from a reel, to spread a preheated liquid glue on one face of the unwound foil, to permanently attach the face of the foil spread with glue on the surface to be coated of the profile during the feed of this latter, and to heat and subsequently press the profile so as to permanently fix the foil to the same profile.

Profile wrapping machines made of PVC and/or aluminium are also typically provided with a primer applying apparatus, which is arranged along the feeding path, between the machine inlet and the foil applying assembly and is structured so as to clean the surface to be coated of the profile so as to remove therefrom any residues of releasing agents, such as lubricants, waxes, paraffin etc., employed during the manufacturing process of the same profile, for example during the extrusion process.

The primer applying apparatus mounted in some currently known profile wrapping machines are structured so as to manually or automatically spread a pre-dosed solvent-resin mix, commonly indicated with the term "primer", on the surface to be coated of the profile, through sliding felt pads arranged with their faces in contact with the same surface to be coated. During feeding of the profile, the felt pads are impregnated with pre-dosed primer and distribute/spread the same primer on the surface of the profile, thus causing it to penetrate the profile. The primer is in fact structured to chemically attack the surface of the profile so as to make it compatible with adhesion of the foil.

The pads also exert a slight abrasion on the same surface to remove residues of releasing agents from the primer. The use of sliding felt pads is somewhat inconvenient as they must be replaced when their capacity to distribute the primer correctly on the profile is compromised due to excessive wear of the pad caused by sliding and/or by reaching a condition in which the same pad is saturated with primer.

However, replacement of the pads causes inconvenient machine downtimes with consequent drawbacks from the point of view of production capacity and in economic terms. Moreover, due to partial wear or incorrect positioning, the sliding felt pads often distribute the primer incorrectly on the surface to be coated, thereby compromising the correct and homogeneous application and cleaning of the same surface and the result of the subsequent wrapping operation. Studies carried out by the Applicant have shown that a substantial percentage of profiles wrapped incorrectly by the machine described above ("rejected" profiles) can be attributed to malfunction of the sliding felt pads.

Moreover, the operation to program the machine described above to dose the correct amount of primer to be spread on the profile through the felt pads is relative long and complex. Studies carried out by the Applicant have shown that the average programming/setting time of the machine, required to adjust the dose of primer distributed through the primer applying apparatus and/or to position the pads correctly, is at times greater than half an hour.

Moreover, feeding of the primer to a saturated pad determines the uncontrolled release of the same primer into the different machine parts/components, causing damage thereto.

In order to overcome the aforesaid problems, some profile wrapping machines have been equipped with a vacuum primer applying apparatus, called vacuum system, comprising a vacuum chamber provided with a die or mould structured so as to be able, in use, to accommodate the profiles passing through. Inside the vacuum chamber, a spray system sprays the pre-dosed primer on the surface of the profile, while a suction system simultaneously draws the excess primer from the same surface. A primer applying apparatus with vacuum chamber is described, for example, in the patent US 2011 0189 402.

Although efficient, vacuum primer applying apparatus have the problem of lacking versatility as they require the moulds to be replaced when the shape of the profiles to be wrapped changes, and therefore have a considerable effect on the total using costs of the machine and, consequently, on the wrapping costs of the profiles.

Vacuum primer applying apparatus also have the following drawbacks: they do not allow accurate regulation of the primer; they do not allow the use of any primer but are limited to primers having a reduced level of efficacy (mildly aggressive) often determining a weak and incomplete surface aggression that significantly prejudices the fixing stability of the foil; they are subject to quantitative errors due to the differences in the sizes of the profiles (tolerances); they are subject to high loss of primer as the vacuum chamber accelerates/amplifies the evaporation of the primer, with all the consequences that this entails in terms of environmental impact.

The object of the present invention is therefore that of producing a profile wrapping machine to wrap profiles by a decorative wrapping foil, which has none of the drawbacks describe above.

According to the present invention, there is produced a profile wrapping machine as specified in claim 1 and preferably, but not necessarily, in any one of the claims directly or indirectly dependent on claim 1.

According to the present invention, there is also provided a method for wrapping profiles as specified in claim 10.

According to the present invention, there is also provided the use of printing heads for applying a primer to a profile as specified in claim 11.

The present invention shall now be described with reference to the accompanying drawings, which illustrate a non-limited example of embodiment thereof, wherein:
- Fig. 1 shows a perspective view with parts removed for clarity of a profile wrapping machine produced according to the dictates of the present invention;
- Fig. 2 is a perspective view of a primer applying apparatus included in the profile wrapping machine shown in Fig. 1;
- Fig. 3 is a front elevation view of the primer applying apparatus shown in Fig. 2;

- Fig. 4 is a perspective view of a spreading device included in the profile wrapping machine shown in Fig. 1;
- Fig. 5 is a schematic front elevation view of the spreading device shown in Fig. 4.

The present invention shall now be described in detail with reference to the accompanying figures to allow a person skilled in the art to produce and use it. Various modifications to the embodiments described will be immediately evident to those skilled in the art and the generic principles described can be applied to other embodiments and applications without however departing from the protective scope of the present invention, as defined in the appended claims. Therefore, the present invention must not be considered limited to the embodiments described and illustrated, but it must be granted the widest scope of protection in conformity with the principles and features described and claimed herein.

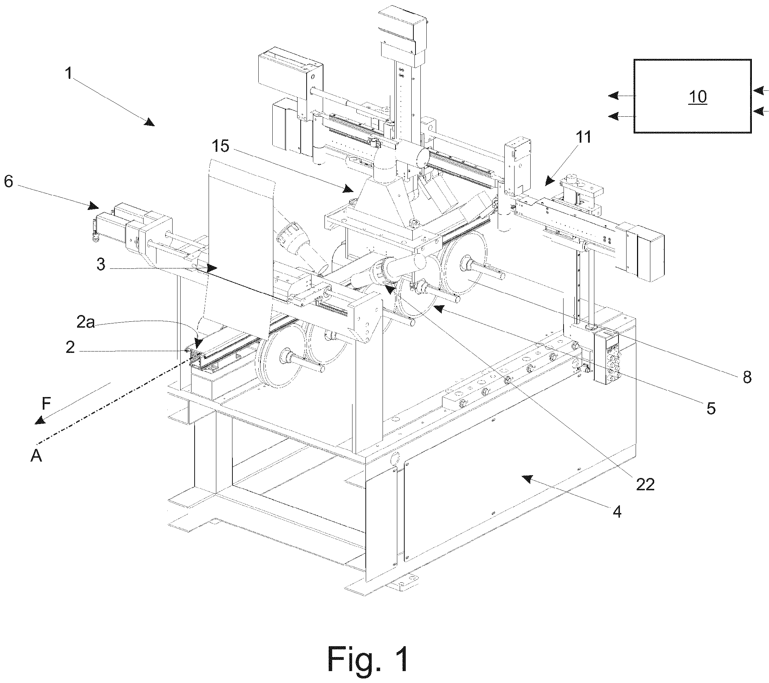

With reference to Fig. 1, the numeral 1 indicates as a whole a machine per covering/wrapping profiles structured so as to cover/wrap profiles 2 by a decorative wrapping sheet or foil 3.

According to a preferred embodiment, the profiles 2 can be made of a rigid material, preferably metal, such as an aluminium alloy and/or a plastic material, for example a plastic polymer such as polyvinyl chloride (PVC) or polypropylene or any similar plastic material. According to a possible embodiment, the profiles 2 can be extrusions made of metal or plastic material and can have any moulding.

It should be specified that the profile wrapping machine 1 can be independent/distinct from other machines, or can be a component part of a complex line/plant/system (not illustrated) comprising a series of machines for processing profiles (not illustrated) associated with one another.

According to a possible embodiment, the foil 3 can have, preferably but not necessarily a flexible thin flat structure preferably, but not necessarily, multilayer made of plastic material. According to a possible embodiment, the foil 3 can preferably comprise at least two thin layers superimposed, in which an inner layer, designed to be fixed on the surface 2a of the profile 2 to be wrapped and on which the decoration designed to be seen is present, can be made of polyvinyl chloride (PVC), while the outer layer can be made of a transparent plastic material, advantageously polymethyl methacrylate (PMMA), designed to filter ultraviolet rays. It should be specified that the present invention is not limited to a multilayer foil 3 comprising the two layers described above but can be formed by any number of layers of plastic material, the same as or different to the plastic materials cited above.

According to a possible embodiment, the profile wrapping machine 1 comprises a supporting frame 4 resting on the ground, which extends along a longitudinal axis A, a profile conveying device 5 preferably supported stably by the frame 4, which is structured to be controlled to move the profiles 2, preferably arranged in a row one behind the other above the frame 4, between an inlet and an outlet of the profile wrapping machine 1 along a feeding path F substantially parallel to the longitudinal axis A.

The profile wrapping machine 1 further comprises a foil applying apparatus or assembly 6 (only partly illustrated in Fig. 1), which is arranged along the feeding path F, is preferably supported by the frame 4 so as to be arranged preferably above the profiles 2, and is structured so as to apply the foil 3 on the surface 2a of the profile 2. The foil applying assembly 6 is of known type and, as it does not form the subject matter of the present invention, shall not be described in more detail, except to specify that it can be designed to: unwind a reel of foil (not illustrated), receive at the inlet an adhesive mixture, preferably heated, liquid or semi-liquid, spread the adhesive mixture received on the lower face of the foil 3, rigidly/permanently attach/couple the lower face of the foil 3 on the surface 2a of the profile 2 during feeding of the profile 2 so as to cover it, heat and subsequently press the profile 2 so as to fix the foil 3 permanently to the same profile.

According to a preferred embodiment shown in Fig. 1, the profile conveying device 5 can comprise a plurality of feeding wheels or rollers 8 of the profiles 2, which are mounted one after the other preferably on the top of the frame 4, so as to rotate freely around corresponding rotation axes preferably parallel/coplanar to one another and transverse to the longitudinal axis A.

According to a preferred embodiment shown in Fig. 1, the feeding rollers 8 can be driven in rotation by one or more driving units, preferably electric motors, through motion transmission mechanisms (not illustrated) and can advantageously have annular outer edges, transverse to the longitudinal axis A, shaped so as to be able to support and feed the profiles 2 one behind the other along the feeding path F. The electric motors of the driving units can be electrically connected to a electronic control unit 10 comprised in the profile wrapping machine 1 and configured to control the same motors through electrical controls so thus adjusting/controlling the rotation speed of the feeding rollers 8 and consequently the feeding speed of the profiles 2 along the direction F based on setting parameters and/or on an operational control program stored in an electronic memory (not illustrated) associated with the same electronic control unit 10.

The profile wrapping machine 1 further comprises a primer applying apparatus 11, which is preferably arranged on the frame 4 along the feeding path F upstream of the foil applying assembly 6, and is designed to apply a liquid primer on the surface 2a of the profile 2 to be wrapped so as to homogenize the same. The liquid primer can be composed of a mixture/blend formed by a solvent designed to clean/cleanse the surface 2a so as to eliminate therefrom residues of releasing agents (for example, lubricants, waxes, paraffin, etc.) and an adhesion promoter resin structured to improve the adhesion of the adhesive mixture on the surface 2a so as to ensure the subsequent fixing of the foil 3.

The solvent is structured so as to cause cleaning of the surface of the profile 2 to be wrapped such as to remove therefrom any residues of releasing agents, such as lubricants, waxes, paraffin, etc., employed during the manufacturing process of the same profile, for example during the extrusion process. The solvent could, for example, contain methylene chloride, MEK (methyl ethyl ketone), or similar esters or solvents.

Instead, with regard to the resin, it could, for example, comprise a thermoplastic resin and/or a polyurethane resin and/or a resin based on polyesters and is structured to chemically attack the surface 2a of the profile 2 so as to make it compatible with adhesion of the foil 2.

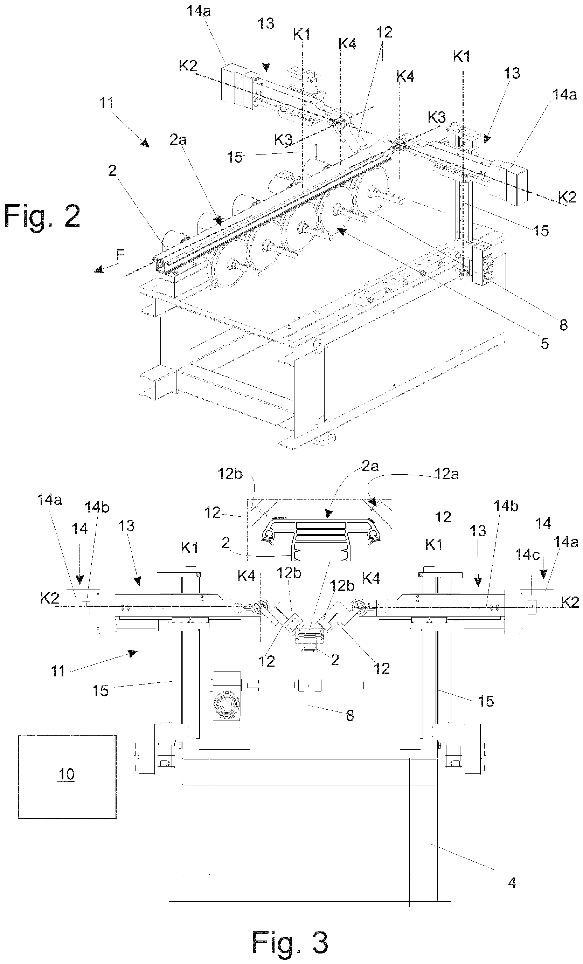

With reference to Figs. 2 and 3, the primer applying apparatus 11 comprises one or more printing heads 12 structured so as to be controlled to deposit minuscule droplets, indicated hereinafter with micro-droplets, of the liquid primer on the surface 2a of the profile 2 to be wrapped, so as to cover it. The printing head/heads 12 are advantageously structured so as to have/integrate the technology "of inkjet printing heads" and are designed to eject/project the micro-droplets in a controlled manner, for example having a volume of the order of the picolitre (10⁻¹² litres) on the surface 2a based on electrical controls supplied by the electronic control unit 10. It is understood that in this case the primer is ejected from the printing heads according to the same method of an "ink" which, as is known, generally comprises organic substances/materials and one or more solvents and which in this case is replaced by the primer.

The Applicant has found that the use of printing heads 12 with inkjet technology makes it possible to obtain a primer applying apparatus 11 without vacuum generating systems, and the technical effect of which is to adjust, with extreme precision, the amount and the position of the droplets of primer applied on the surface 2a of the profile 2. This technical effect allows to solve the following technical problems: the need to have a vacuum chamber, moulds and complex, costly and bulky suction systems; uncontrolled overdosing and therefore waste of the primer during its application, with related costs and problems associated with environmental impact; the restriction of using a primer compatible with the "vacuum" applying process; unstable fixing of the foil due to differences in the sizes of the profiles relative to the mould installed in the vacuum primer applying apparatus; high primer loss caused by the evaporation of the same primer due to the vacuum.

With reference to an example of embodiment shown in Fig. 3, the printing heads 12 can comprise one or more nozzles 12a, having extremely small sizes, i.e. micro-nozzles, and one or more ejector mechanisms 12b designed to eject the droplets through the related nozzles 12 based on corresponding electrical controls.

According to an example of embodiment, the ejector mechanism 12b associated with a nozzle could comprise at least one electrically operated thermal component, for example at least one resistor, structured to heat up rapidly (a few microseconds) to generate and eject primer vapour bubbles through the nozzle 12a, or at least one piezoelectric component (piezoelectric crystal) designed to deform when subjected to an electrical pulse so as to eject a micro-droplet through the nozzle 12a. Alternatively, the ejector mechanism 12a could comprise at least one shutter member moving in an ejection chamber of the primer, and a solenoid (not illustrated) that moves the shutter member in the chamber based on an electrical pulse so as to eject the droplets of primer through the nozzle 12a.

The Applicant has found that it could be advantageous to use, for example, printing heads manufactured by the company Trident®, for example Trident 384Jet NP™ and/or 768JET and/or ultrajet II and/or 256 Jet-S TM printing heads.

The Applicant has also found that it could be advantageous to use inkjet printing heads produced according to DOD (Drop On Demand) technology. Preferably, inkjet printing heads can be produced according to thermal DOD or piezoelectric DOD technology.

The Applicant has also found that it could be advantageous to use printing heads corresponding to high resolution industrial inkjet marking printing apparatuses (for example with a resolution ranging between 7 and 32 points). Purely by way of non-limiting example and without any loss of generality, the Applicant has found that a printing head installable in the machine 1 could, for example, correspond to the industrial inkjet marking printing device named "LC-16 116 FD" manufactured by Independent Ink Europe.

With reference to a preferred embodiment shown in Figs. 2 and 3, the primer applying apparatus 11 can further comprise a primer feeding device 14 designed to feed the primer to the printing heads 12 in a controlled manner. The primer feeding device 14 can, for example, comprise one or more reservoirs 14a containing the primer, in fluid communication with the related printing heads 12 through respective feeding ducts 14b.

The primer feeding device 14 can further comprise flow/flow rate regulating devices 14c, for example electrically operated micropumps and/or gravity feeding systems, in fluid communication with the reservoirs 14a and the feeding ducts 14b. The micropumps or the gravity feeding systems are operated/controlled by the electronic control unit so as to feed the printing head 12 with a predetermined amount of primer necessary for emission of the droplets and to thus produce the layer of primer on the surface 2a.

With reference to a preferred embodiment shown in Figs. 2 and 3, the primer applying apparatus 11 can advantageously further comprise moving devices 13, which are preferably supported by the frame 4 and are structured to move the printing heads 12 around one or more axes and or along one or more axes.

According to an embodiment shown in Figs. 2 and 3, the primer applying apparatus 11 comprises two printing heads 12 arranged on opposite sides relative to each other with respect to the centreline plane of the profile wrapping machine 1 vertical and parallel to the axis A, and are each supported by a related robotized arm 13. According to an example of embodiment shown in Figs. 2 and 3, the robotized arm 13 supports, at one end, the printing head 12, and is mechanically coupled to a vertical column 15 which extends laterally from the frame 4, preferably upwards, so as to be able to move along an axis K1, preferably vertical. In the example illustrated in Fig. 2, the robotized arm 13 is further structured to be controlled to move so as to make the printing head 12 perform a rectilinear movement along an axis K2 (for example horizontal) preferably transverse to the axis K1 and/or a rotation around an axis K3 (for example horizontal) orthogonal to the axis K2 and/or a rotation around an axis K4 (for example vertical) orthogonal to the axes K2 and K3 so as to make the printing head 12 perform a controlled swivelling. It is understood that the present invention is not limited to robotized arms 13 capable of moving the printing head 12 around the axes K1-K4 described and illustrated above, but can be provided with different movement mechanisms that make the printing head perform additional rotations/translations dependent on the section and on the sizes of the profile 2 to be covered.

With reference to Figs. 1, 3 and 4, the profile wrapping machine 1 further comprises a spreading apparatus, which is arranged along the feeding path A downstream of the primer applying apparatus 11 and upstream of the foil applying assembly 6, and is designed to spread/distribute the micro-droplets of primer deposited on the surface 2a so as to form a uniform layer of primer thereon.

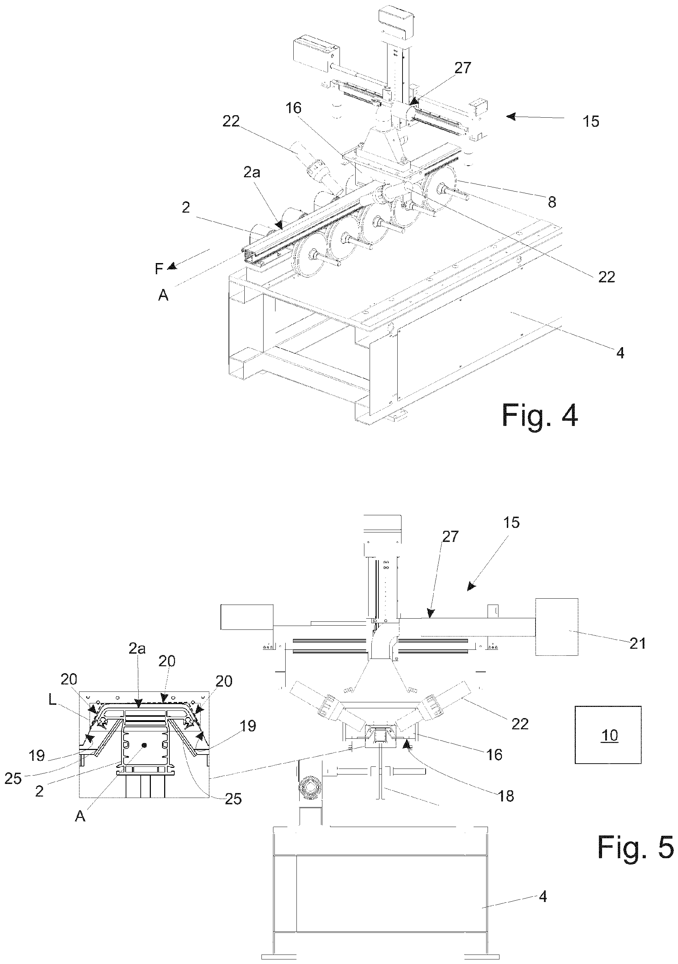

According to a preferred embodiment shown in Figs.4 and 5, the spreading apparatus can advantageously comprise an air spreading device 15. With reference to the example shown in Fig. 5, the air spreading device 15 is supported by the frame 4 so as to be arranged immediately above the surface 2a of the profile 2 and is structured so as to generate an air blade L lying approximately on a plane transverse to the axis A, preferably vertical, so as to be passed through by the profile 2 during feeding of the same profile 2 along the path F.

The Applicant has found that if the moving profile 2 passes through the air blade L at a predetermined speed this has the technical effect of obtaining a uniform thickness of the layer of primer on the whole surface 2a. Moreover, by regulating the air flow rate in the air blade L and/or the feeding speed of the profile 2 along the direction F, the technical effect of regulating with extremely accuracy the thickness of the layer of primer on the surface 2a is obtained.

According to a preferred embodiment, the air spreading device 15 can comprise a closed box-shaped frame 16 made of rigid material, such as metal, preferably but not necessarily parallelepiped in shape, having a preferably flat and horizontal lower wall or base 18 facing the frame 7, which has a concavity or central recess 19 shaped such as to provide a negative impression of the profile 2 so as to allow the profile 2 to pass through it during movement of the same along the feeding path F. In particular, in the example illustrated, the box-shaped frame 16 is arranged so that the outer surface of the recess 19 is immediately adjacent to and facing the surface 2a of the profile 2 so as to surround it. The recess 19 is further provided with a rectilinear slit or slot 20 that lies on a plane orthogonal to the axis A and extends in the base 18 so as to surround in use at least the surface 2a of the profile 2.

According to a preferred embodiment of the air spreading device 15, the box-shaped frame 16 can further be provided with two appendages or wings 25 bent approximately in an L shape, which extend from the base 18 and continue into the recess 19 so as to be arranged symmetrically with respect to the centreline plane of the box-shaped frame 16 and are designed to form with the relative upper ends of the supporting guides of the profile 2 designed to maintain the surface 2a facing the slot 20 and to maintain the profile 2 aligned during its feed along the feeding path F.

According to a preferred embodiment, the air spreading device 15 is further provided with an air generating device 21, for example comprising a compressor apparatus which can be connected to the box-shaped body 16 through a duct 25 for feeding air with a certain pressure into the same and to ensure that the air is ejected from the box-shaped body 16 through the slot 20. It is understood that the air spreading device 15 according to the present invention is not limited to the generation of an air blade L but according to an alternative embodiment (not illustrated) can draw the air through the slot 20 through a suction device, for example a vacuum pump (not illustrated) which, in this case replaces the air generating device.

With reference to Fig. 1, 4 and 5, the profile wrapping machine 1 can further comprise a heating assembly 22 designed to generate heat at the surface 2a so as to cause evaporation of the solvent of the primer. According to a preferred embodiment shown in Fig. 1, the heating assembly 22 comprises hot air blowing devices (guns) designed to emit flows/jets of heated air against the surface 2a. It is understood that the present invention is not limited to hot air blowing devices but can comprise, alternatively or in addition to the latter, devices that emit infrared rays (IR lamps) or similar devices.

In use, the electronic control unit 10 controls the profile conveying device 5 to feed the profiles 2 along the feeding path F so as to pass through, in sequence, the primer applying apparatus 11, the air spreading device 15, the heating assembly 22 and the foil applying assembly 6.

The electronic control unit 10 controls the movement of the printing heads 12 through moving the robotized arms 13 and controls the printing heads 1 to emit the droplets so as to deposit them on the surface 2a. The electronic control unit 10 can be configured in order to control the movement of the robotized arms 13 and therefore of the printing heads 2 through a suitable control (software) program as a function of the feeding speed of the profile 2, so that the primer is deposited continuously on the surface 2a such as to produce a surface layer of primer that completely wraps/covers the same.

Moreover, the electronic control unit 10 controls the spreading device 15 in order to generate the air blade that spreads the micro droplets deposited on the face 2a and activates the heating assembly 22 in order to evaporate the solvent present in the primer applied before the application of the foil 3.

Besides the technical effects described above, the profile wrapping machine and the method described above have the advantages of significantly reducing the production costs of the machine and the setting times of the same and allow elimination of machine downtime cased by the need to replace the pads or the moulds required in prior art machines, in particular those using the vacuum solution.

Finally, it is clear that modifications and variants can be made to the profile wrapping machine and to the method described and illustrated herein without departing from the scope of the present invention.

## Claims

1. A profile wrapping machine (1) structured to cover a profile (2) by a wrapping foil (3);
said machine comprising:
conveying means (5) designed to move forward the profiles along a predetermined feeding path (F);
foil applying means (6), which are arranged along said feeding path (F) and are designed to apply a foil (3) on a surface to be coated (2a) of the profiles (2);
primer applying means (11), which are arranged along said feeding path (F) upstream of said foil applying means (6) and are designed to apply on said surface to be coated (2a) of the profile (2) a liquid primer designed to homogenize said surface to be coated (2a);
said profile wrapping machine being **characterized in that** said primer applying means (11) comprise one or more printing heads (12) structured to deposit droplets of said liquid primer on said surface to be coated (2a) of the profile (2) so as to cover the same.

2. The profile wrapping machine according to claim 1, wherein said printing head (12) comprises a micro nozzle (12a) and electrical ejection means (12b) designed to project droplets through said micro nozzle (12a) based on an electrical control.

3. The profile wrapping machine according to claims 1 or 2, wherein said printing head (12) is an inkjet technology printing head.

4. The profile wrapping machine according to any one of the preceding claims, comprising:
moving means (13) designed to move said printing head (12) and electronic control means (10) configured to control said moving means (13) with respect to said profile (2) to cause the printing head (12) to deposit the droplets of liquid primer on said surface to be coated (2a) in order to produce a layer of primer on the same.

5. The profile wrapping machine according to claim 4, wherein primer applying means (11) comprise two printing heads (12) arranged on opposite sides relative to each other with respect to the centreline plane of said profile (2) and wherein said moving means (13) comprise robotized arms, each of which supports and moves/rotates a corresponding printing head along and/or around one or more predetermined axes.

6. The profile wrapping machine according to claim 1, comprising a spreading device (15), which is arranged along said feeding path (F) between said primer applying means (11) and said foil applying means (6), and is designed to spread the primer droplets on said surface to be coated (2a) so as to form a uniform primer layer.

7. The profile wrapping machine according to claim 5, wherein said spreading device (15) comprises an air spreading device.

8. The profile wrapping machine according to claim 7, wherein said air spreading device is designed to generate at least one air blade (L) lying approximately on a plane transverse to the longitudinal axis (A) of said profile (2).

9. A machine according to claim 2, wherein said electrical ejection means (12b) comprise at least an electrically operated thermal component structured to heat up rapidly so as to generate and eject primer vapour bubbles through said nozzle (12a).

10. The machine according to claim 2, wherein said electrical ejection means (12b) comprise at least a piezoelectric component designed to deform when subjected to an electrical pulse so as to eject a micro-droplet through said nozzle (12a).

11. The machine according to claim 2, wherein said electrical ejection (12b) means comprise at least a shutter member moving in an ejection chamber of the primer, and a solenoid that moves the shutter member in the chamber based on an electrical pulse so as to eject the droplets of primer through said nozzle (12a).

12. The machine according to claim 3, wherein said inkjet technology printing head is produced according to thermal DOD or piezoelectric DOD technology.

13. The machine according to any one of the preceding claims, wherein said primer applying means (11) comprise a primer feeding device (14) designed to feed the primer to said printing head (12).

14. The machine according to claim 13, wherein said primer feeding device (14) comprises electrically operated micropumps and/or gravity feeding systems, in fluid communication with reservoirs (14a) and feeding ducts (14b) operated/controlled by an electronic control unit so as to feed the printing head (12) with a predetermined amount of primer.

15. The machine according to any one of the preceding claims, wherein said liquid primer is based on a solvent designed to clean/cleanse the surface (2a) and an adhesion promoter resin structured to improve adhesion of the adhesive mixture on the surface (2a) so as to ensure subsequent fixing of the foil (3).
